Europäisches Patentamt

European Patent Office

Office européen des brevets

(11) Publication number: **0 150 887**
**B1**

## EUROPEAN PATENT SPECIFICATION

(45) Date of publication of patent specification: **02.05.90**

(21) Application number: **85200086.8**

(22) Date of filing: **28.01.85**

(51) Int. Cl.⁵: **A 01 D 73/00, A 01 D 43/06**

(54) Remote controlled agricultural machine.

(30) Priority: **31.01.84 GB 8402548**

(43) Date of publication of application:
**07.08.85 Bulletin 85/32**

(45) Publication of the grant of the patent:
**02.05.90 Bulletin 90/18**

(84) Designated Contracting States:
**DE FR GB**

(56) References cited:
**EP-A-0 070 340**
**DE-A-1 632 824**
**DE-A-2 807 887**
**GB-A-2 073 914**
**US-A-4 031 963**

(73) Proprietor: **FORD NEW HOLLAND N.V.**
**Leon Claeysstraat 3a**
**B-8210 Zedelgem (BE)**

(72) Inventor: **Strubbe, Gilbert J.I.**
**Loppemsestraat 58b**
**B-8021 Loppem-Zedelgem (BE)**

(74) Representative: **Vandenbroucke, Alberic T.J.**
**et al**
**Ford New Holland NV. Patent Department Leon**
**Claeysstraat, 3A**
**B-8210 Zedelgem (BE)**

## Description

This invention relates to pull-type or towable agricultural machines of the type as specified in the preamble of claim 1 and which thus, in use, are hitched to a towing vehicle such as a tractor and which are equiped for wireless remote control from said tractor.

With pull-type machines having components which have to be controlled from the towing vehicle certain disadvantages arise, one of which is that control cables have to be taken from the controls located in the cab of the towing vehicle to a connector on the towing vehicle which receives a complementary connector attached to cables leading to the components to be controlled on the agricultural machine. Cabling is cumbersome and furthermore also relatively expensive and, when installed on the towing vehicle, it is necessary to drill the cab structure for the through passage of the cables which can be detrimental to the sound-proofing which is installed in modern vehicles such as tractors. Another disadvantage is that if a farmer has a plurality of pull-type machines, then it is likely that he will need the same number of controls, connectors and sets of cabling in view of the different forms of control required for the various machines. In as much as there is a practical limit to the controls and cabling which can be accomodated in a given cab, it often happens that a farmer is restricted to one tractor fitted out to tow and control one machine, and another tractor fitted out to tow and control another machine, it would be far more convenient if any tractor or other vehicle could tow and control any machine.

Alternatively the control box of a given pull-type machine may be coupled without the use of any connectors via a flexible cable string to the machine components to be controlled. Such a control box is suited to be attached to a support within the tractor cab with the cable string passing through e.g. a cab window which therefore has to be opened and left open during the operation of the machine. Obviously, this is even more detrimental to the sound proofing of the cab and further adversely affects the air conditioning within the cab and permits the ingress of dirt.

Remote control means of the type as considered herebefore and for use in conjunction with pull-type agricultural machines have been described in DE—A—1.632.824. This document further also describes, in general terms, wireless remote controls for controlling a plurality of functions of a pull-type agricultural machine. To this end, a transmitter, capable of transmitting electro-magnetic signals, is provided on the tractor means and a receiver, capable of receiving said electro-magnetic signals is mounted on the agricultural machine. Different frequencies are used for distinguishing between the various command signals. The receiving means are operable, in response to the command signals received from the transmitter means, to actuate the appropriate actuator means associated with the machine components to be controlled.

The wireless remote control means as disclosed in DE—A—1.632.824 are plagued with a plurality of shortcomings and drawbacks, especially when used on pull-type agricultural machines operated in combination with modern towing tractor means equiped with cabs enclosing the operator station thereof.

It is the objective of the present invention to overcome these shortcomings and drawbacks of known pull-type agricultural machines equiped with remote controls. More specifically it is the objective to provide pull-type agricultural machinary with wireless remote controls which can be utilized for controlling various machine components from within the cab of a modern tractor in an efficient manner and without being troubled with interferences of any kind.

This objective is accomplished with an agricultural machine which is equiped with a wireless remote control as specified in the claims attached hereto.

The remote control and/or monitoring of pull-type agricultural machinery which, in accordance with the present invention uses transmitter and receiver means capable of transmitting and receiving encoded signals, is advantageous in many respects. Indeed, it not only enables wireless remote control and/or monitoring, which in itself is already a major step forward, but it also enables the remote control and/or monitoring of a plurality of machine functions without any interference therebetween. Furthermore, the use of encoded signals enables remote controls and/or monitoring in widely varying environmental conditions (darkness, dark weather conditions, dirty cab, windows, abundant sunshine....) and without suffering from any stray signals (abundant sunshine, citizen band radio signals....).

An agricultural machine in accordance with the present invention will now be described in greater detail, by way of example, with reference to the accompanying drawings, in which:

Fig 1 is a side view of the machine,

Fig 2 is an electrical circuit diagram, and

Fig 3 is a perspective view of a controller for controlling the machine of Figure 1.

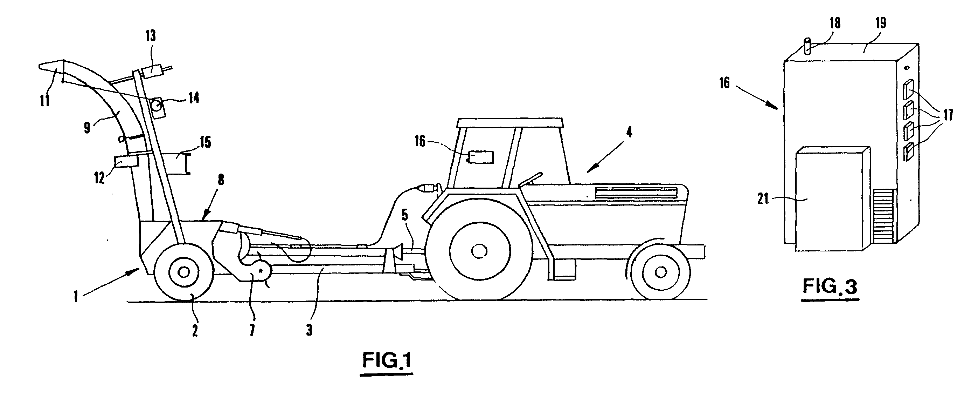

The agricultural machine shown in Figure 1 is a basically conventional pull-type forage harvester 1 having a base frame, a pair of ground wheels 2, a drawbar 3 which is shown hitched to a towing tractor 4, and a drive shaft 5 which is shown connected to the power-take-off shaft of the tractor. The forage harvester further comprises a crop pickup unit 7 which is movable generally vertically between a raised, transport position and a lowered, operative position, a chopper unit indicated generally at 8 but not seen in any detail, reversible feeder means, equally not shown and a crop discharge spout 9 connected to the outlet of the chopper unit and having the usual deflector 11 at its discharge end. The discharge spout 9 is fitted with a swivel control 12 for moving the spout in azimuth, a vertical control 13 for moving the spout vertically, and a deflector control 14 for moving the deflector 11.

In accordance with the present invention, the forage harvester is fitted with a wireless remote control means including, on the one hand, a first control unit 16 mountable within the tractor cab and comprising a transmitter for transmitting encoded command signals and, on the other hand, a further control unit 15 mounted on the forage harvester and comprising a receiver and actuator for receiving encoded command signals from the transmitter and for actuating machine components in accordance with said command signals. The further control unit 15 including the receiver and actuator is mounted on the machine via antivibration mounts. The encoded signals preferably are of the infra-red type in as much as such signals penetrate through the cab window. Other signals such as ultrasonic signals are less-suitable in as much as such signals do not penetrate through the cab windows and thus would necessitate the installation of the first control unit 16 including the transmitter outside the tractor cab which is undesirable. The first control unit 16 is of the conventional hand held type and, as shown in greater detail in Figure 3, comprises four control buttons 17, a rangechange button 18, and a transmission window 19. For as long as a control button 17 is depressed, the controller transmits an encoded signal through the window 19 and, provided the window is directed generally towards the further control unit 15 on the forage harvester, then the transmitted signal will be received thereby. If the rangechange button 18 is depressed, then a further four differently encoded signals are available via the control buttons 17. A permanent magnet 21 is attached to the housing of the first control unit 16 in such a position as not to interfere with any of the inductance devices forming part of the transmitter. The magnet 21 allows the controller to be attached to a metallic part of the tractor cab convenient to the operator.

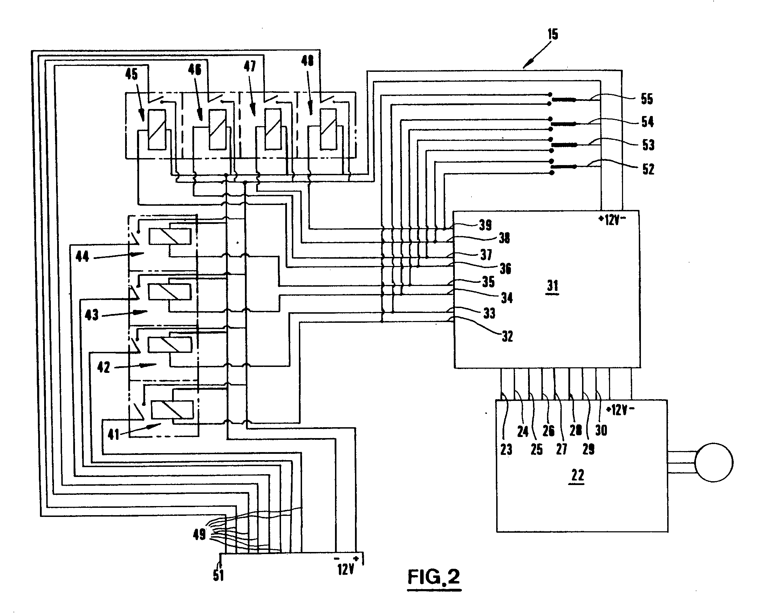

Figure 2 shows a circuit diagram of the further control unit 15 which comprises a decoder 22 which decodes each received signal and outputs the decoded signal on the appropriate one of output lines 23 to 30. The decoded signal is amplified by an amplifier 31; all amplifiers being shown as a single block; and the amplified signal sent on the appropriate one of eight output lines 32 to 39 connected to respective relays 41 to 48. The outputs 49 from the relays 41 to 48 are taken to connector 51 to which the motor or other actuator connections (not shown) and the battery connections (also not shown) are also taken. Each motor or actuator has two relays associated therewith in order that operation in one direction or another can be commanded to effect raising or lowering, or right-hand or left-hand movement of the component being controlled, as appropriate. If a component to be controlled is single acting, such as an electromagnetic clutch, for example, then only one of the two relays allocated thereto is employed, it being convenient to provide a standard further control unit 15 with the maximum number of relays.

The further control unit 15 is also fitted with four doublethrow switches 52 to 55 which can be used to energise any of the eight relays 41 to 48 and thus control any of the components of the forage harvester connected to the further control 'unit 15. The switches 52 to 55 e.g. can be used to override the first control unit 16 for test purposes and can be used in a diagnostic role. It should be noted that the switches 52 to 55 are not essential to the operation of the present invention and may be omitted.

To illustrate the operation of the invention it will be assumed that the discharge spout swivel control motor 12 is connected to the relays 41 and 42 which in turn are connected to the decoder 22 via control channels represented by the output lines 32, 33 and 23, 24. When the operator depresses the button 17 on the first control unit 16 appropriate to say swivelling of the discharge spout 9 to the right, the encoded command signal will be transmitted through the window 19 to the further control unit 15 (provided the window is directed thereat) and the decoder 22 will decode that signal and output it on line 23 to the amplifier 31. The signal is then amplified and sent on output line 32 to the relay 41 which is thus energised and delivers the command signal to the swivel control 12 via the associated output line 49 and connector 51. Thus the spout 9 will be moved to the right for as long as the appropriate control button 17 is depressed. Movement to the left is effected by depressing a different button 17 to generate a differently encoded command signal which is encoded as before but this time sent on output line 24 to the amplifier 31 and thence on output line 33 to the relay 42. Control of the other components is effected in a generally similar manner, including the direction of rotation of the reversible feeder means to the chopper unit 8.

It will be seen that the present invention affords a very simple and very effective apparatus and method for controlling the operation of an agricultural machine such as a forage harvester without involving cumbersome cabling connecting the machine to the towing vehicle and thus avoiding structural modification of the latter to accept the cabling. Furthermore, the machine can be controlled other than from within the towing vehicle, should this be necessary, by the operator taking the first control unit 16 from the tractor cab and operating it from any desired position, provided there is a direct "line of sight" from the first control unit to the further control unit 15. Incidentally, it should be noted that encoded infra-red signals transmitted from within the cab have been found to penetrate a cab window which is reasonable dirty whereby the first control unit 16 will be able to "see" the further control unit 15 if the operator can see the machine which he normally needs to do in order to monitor the performance thereof.

It will be appreciated that the invention can be adapted to any pull-type machine: for example, it can be used with a pull-type round baler in which the drawbar, the tailgate and the twine-wrapping mechanism will normally be controlled. It can also be used with a pull-type combine harvester to control, respectively monitor the numerous functions of such a machine.

The present invention also covers the possibility of monitoring a harvesting machine as regards a harvesting or crop condition and/or a characteristic of one or more components, which characteristic may be associated with component wear, for example. In the illustrated embodiment, for example, the feeder means to the chopper unit 8 could be provided with a sensor which will produce an output signal indicative of whether the drive is in the forward or reverse mode, and the pick-up unit 7 may be provided to indicate whether the unit is in the raised, transport position or the lowered, operative position. The sensor output signals would be encoded and transmitted to a receiver in the tractor cab which will decode the signals and perhaps display the conditions represented thereby.

## Claims

1. A towable agricultural machine (1) for use in conjunction with a towing tractor means (4) having an operator station; said machine (1) including: a) a plurality of components (7, 9, 11) to be controlled from the tractor means (4) during operation; b) actuator means (12, 13, 14) associated with each one of said components (7, 9, 11) and c) wireless remote control means (15, 16) using encoded signals and associated with said actuator means (12, 13, 14); said control means (15, 16) comprising:

a first control unit (16) useable in the vicinity of the operator station of the tractor means (4) and including encoding means for producing a plurality of encoded command signals appropriate to the number and type of actuator means (12, 13, 14) to be controlled and transmitter means capable of transmitting these command signals; and

a further control unit (15) cooperable with the first control unit (16) and mounted on the agricultural machine (1); said further control unit (15) including receiver and decoding means and at least one control channel associated with each one of said actuator means (12, 13, 14); said receiver and decoding means being operable to receive said command signals from the transmitter means;

to decode said command signals and to direct each one of said command signals through the appropriate channel to the corresponding actuator means (12, 13, 14) to thereby actuate the component (7, 9, 11) associated with that actuator means (12, 13, 14) in accordance with said control signal;

said agricultural machine being characterized in that:

the transmitter means comprises a transmission window (19) so that, to generate the desired response by the further control unit (15), said transmitter means need to be directed with said transmission window (19) generally towards the receiver means when, in use, transmitting a command signal.

2. An agricultural machine (1) according to claim 1 characterized in that the remote control means (15, 16) use encoded infra-red signals.

3. An agricultural machine (1) according to claim 1 or 2 characterized in that the further control unit (15) further also comprises:

amplifier means (31) which amplify the decoded signals and

relay means (41—48) responsive to respective decoded signals and operable to control machine components (7, 9, 11) associated therewith.

4. An agricultural machine (1) according to claim 3, characterized in that:

at least one actuator means (12) is formed by an electric motor and,

the further control unit (15) comprises one relay (41) to control operation of said motor (12) in one direction and a further relay (42) to control operation of this motor (12) in the other direction.

5. An agricultural machine (1) according to claim 3 or 4 characterized in that the further control unit (15) comprises switch means (52—55) operable to actuate the respective relay means (41—48) and hence control the associated components (7, 9, 11) independently of any transmitted encoded command signal.

6. An agricultural machine (1) according to any of the preceding claims characterized in that:

said machine also comprises one or more sensor means operable to sense one or more characteristics of the machine and to produce electrical output signals representative thereof;

the further control unit (15) also comprises a) further encoding means for encoding said electrical output signals and b) further transmitter means for transmitting said encoded output signals; and

the first control unit (16) also comprises a) further receiver means for receiving said encoded output signals from said further transmitter means; b) further decoding means for decoding said encoded output signals and c) display means for displaying the machine characteristics represented thereby.

## Patentansprüche

1. Gezogene landwirtschaftliche Maschine (1) zur Verwendung in Verbindung mit einer Schlepp-Traktoreinrichtung (4), die eine Bedienungsstation aufweist, wobei die Maschine (1): a) eine Mehrzahl von von der Traktoreinrichtung (4) aus im Betrieb zu steuernden Bauteilen (7, 9, 11), b) jedem dieser Bauteile (7, 9, 11) zugeordnete Stellgliedeinrichtungen (12, 13, 14) und c) drahtlose Fernsteuereinrichtungen (15, 16) einschließt, die codierte Signale verwenden und den Stellgliedeinrichtungen (12, 13, 14) zugeordnet sind, und wobei die Steuereinrichtungen (15, 16) folgende Teile umfassen:

eine erste Steuereinheit (16), die in der Nähe der Bedienungsstation der Traktoreinrichtung (4) benutzbar ist und Codiereinrichtungen zur Erzeugung einer Mehrzahl von codierten Befehlssignalen entsprechend der Anzahl und Art der zu steuernden Stellgliedeinrichtungen (12, 13, 14) und Sendereinrichtungen einschließt, die diese Befehlssignale aussenden können, und

eine weitere Steuereinheit (15), die mit der ersten Steuereinheit (16) zusammenwirken kann und auf der landwirtschaftlichen Maschine (1) befestigt ist, wobei die weitere Steuereinheit (15) Empfänger- und Decodiereinrichtungen und zumindestens einen Steuerkanal einschließt, der jeder der Stellgliedeinrichtungen (12, 13, 14) zugeordnet ist, wobei die Empfänger- und Decodiereinrichtungen so betätigbar sind, daß sie die Befehlssignale von den Sendereinrichtungen empfangen und die Befehlssignale decodieren und jedes der Befehlssignale durch den entsprechenden Kanal an die entsprechende Stellgliedeinrichtung (12, 13, 14) leiten, um auf diese Weise das dieser Stellgliedeinrichtung (12, 13, 14) zugeordnete Bauteil (7, 9, 11) entsprechend dem Steuersignal zu betätigen,
dadurch gekennzeichnet, daß:

die Sendereinrichtungen ein Sendefenster (19) derart umfassen, daß zur Erzeugung des gewünschten Ansprechverhaltens durch die weitere Steuereinheit (15) die Sendeeinrichtungen mit dem Sendefenster (19) allgemein auf die Empfängereinrichtungen gerichtet sein müssen, wenn sie im Betrieb ein Befehlssignal übertragen.

2. Landwirtschaftliche Maschine (1) nach Anspruch 1, dadurch gekennzeichnet, daß die Fernsteuereinrichtungen (15, 16) codierte Infrarotsignale verwenden.

3. Landwirtschaftliche Maschine (1) nach Anspruch 1 oder 2, dadurch gekennzeichnet, daß die weitere Steuereinheit (15) außerdem folgende Teile umfaßt:

Verstärkereinrichtungen (31), die die decodierten Signale verstärken, und

Relaiseinrichtungen (41—48), die auf die jeweiligen decodierten Signale ansprechen und so betätigbar sind, daß sie die ihnen zugeordneten Maschinenbauteile (7, 9, 11) steuern.

4. Landwirtschaftliche Maschine (1) nach Anspruch 3, dadurch gekennzeichnet, daß

zumindestens eine Stellgliedeinrichtung (12) durch einen Elektromotor gebildet ist, und

die weitere Steuereinheit (15) ein Relais (41) zur Steuerung der Betätigung des Motors (12) in einer Richtung und ein weiteres Relais (42) zur Steuerung des Betriebs dieses Motors (12) in der anderen Richtung umfaßt.

5. Landwirtschaftliche Maschine nach Anspruch 3 oder 4, dadurch gekennzeichnet, daß die weitere Steuereinheit (15) Schaltereinrichtungen (52—55) umfaßt, die so betätigbar sind, daß sie unabhängig von einem übertragenen codierten Befehlssignal die jeweiligen Relaiseinrichtungen (41—48) betätigen und damit die zugehörigen Bauteile (7, 9, 11) steuern.

6. Landwirtschaftliche Maschine (1) nach einem der vorhergehenden Ansprüche, dadurch gekennzeichnet, daß

die Maschine weiterhin ein oder mehrere Sensoreinrichtungen aufweist, die zur Messung einer oder mehrerer Eigenschaften der Maschine und zur Erzeugung von diese darstellenden elektrischen Ausgangssignalen betreibbar sind,

die weitere Steuereinheit (15) außerdem a) weitere Codiereinrichtungen zur Codierung der elektrischen Ausgangssignale und b) weitere Sendereinrichtungen zur Übertragung der codierten Ausgangssignale umfaßt, und

die erste Steuereinheit (16) außerdem a) weitere Empfängereinrichtungen zum Empfang der codierten Ausgangssignale von dem weiteren Sendereinrichtungen, b) weitere Decodiereinrichtugnen zur Decodierung der codierten Ausgangssignale und c) Anzeigeeinrichtungen zur Anzeige der hierdurch dargestellten Maschineneigenschaften umfaßt.

**Revendications**

1. Machine agricole apte à être remorquée (1) destinée à être utilisée conjointement avec des moyens tracteurs de remorquage (4) équipés d'un poste de conduite; laquelle machine (1) comprend: a) une série d'organes (7, 9, 11) destinés, en fonctionnement, à être commandés à partir des moyens tracteurs (4); b) des moyens d'actionnement (12, 13, 14) associés à chacun desdits organes (7, 9, 11); et c) des moyens de commande à distance sans fil (15, 16) qui utilisent des signaux codés et sont associés auxdits moyens d'actionnement (12, 13, 14); lesdits moyens de commande (15, 16) comportant:

une première unité de commande (16) utilisable à proximité du poste de conduite des moyens tracteurs (4) et comprenant des moyens codeurs pour produire une série de signaux de commande codés appropriés au nombre et au type des moyens d'actionnement (12, 13, 14) destinés à être commandés, et des moyens transmetteurs capables de transmettre ces signaux de commande; et

une seconde unité de commande (15) apte à coopérer avec la première unité de commande (16) et montée sur la machine agricole (1); laquelle seconde unité de commande (15) comprend des moyens récepteurs et décodeurs et au moins un canal de commande associé à chacun desdits moyens d'actionnement (12, 13, 14); lesdits moyens récepteurs et décodeurs étant aptes à opérer pour recevoir lesdits signaux de commande provenant des moyens transmetteurs, pour décoder ces signaux de commande et pour adresser chacun d'eux, par l'intermédiaire du canal approprié, au moyen d'actionnement (12, 13, 14) correspondant pour ainsi actionner l'organe (7, 9, 11) associé à ce moyen d'actionnement (12, 13, 14), en fonction dudit signal de commande;

ladite machine agricole étant caractérisée en ce que:

les moyens transmetteurs comportent une fenêtre de transmission (19), de sorte que, lors de la transmission d'un signal de commande, en service, il faut, pour engendrer la réponse voulue de la part de la seconde unité de commande (15), que lesdits moyens transmetteurs soient orientés de façon que ladite fenêtre de transmission (19) soit dans l'ensemble tournée vers les moyens récepteurs.

2. Machine agricole (1) selon la revendication 1, caractérisée en ce que les moyens de commande à distance (15, 16) utilisent des signaux infrarouges codés.

3. Machine agricole (1) selon la revendication 1 ou 2, caractérisée en ce qu'en outre, la seconde unité de commande (15) comporte également:

des moyens amplificateurs (31) qui amplifient les signaux décodés, et

des moyens formant relais (41—48) sensibles aux signaux décodés respectifs et aptes à opérer pour commander les organes de machine (7, 9, 11) auxquels ils sont associés.

4. Machine agricole (1) selon la revendication 3, caractérisée en ce que:

l'un (12) au moins des moyens d'actionnement est constitué par un moteur électrique, et

la seconde unité de commande (15) comporte un premier relais (41) pour commander un fonctionnement dudit moteur (12) dans une direction, et un second relais (42) pour commander un fonctionnement de ce moteur (12) dans l'autre direction.

5. Machine agricole (1) selon la revendication 3 ou 4, caractérisée en ce que la seconde unité de commande (15) comporte des moyens commutateurs (52—55) aptes à opérer pour actionner les moyens formant relais (41—48) respectifs et pour, par conséquent, commander les organes (7, 9, 11) associés, indépendamment de tout signal de commande codé transmis.

6. Machine agricole (1) selon l'une quelconque des revendications précédentes, caractérisée en ce que:

ladite machine comporte également au moins un moyen détecteur apte à opérer pour détecter une ou plusieurs caractéristiques de la machine et pour produire des signaux de sortie électriques représentatifs de celles-ci;

la seconde unité de commande (15) comporte également a) des moyens codeurs supplémentaires pour coder lesdits signaux de sortie électriques, et b) des moyens transmetteurs supplémentaires pour transmettre lesdits signaux de sortie codés; et

la première unité de commande (16) comporte également a) des moyens récepteurs supplémentaires pour recevoir lesdits signaux de sortie codés provenant desdits moyens transmetteurs supplémentaires, b) des moyens décodeurs supplémentaires pour décoder lesdits signaux de sortie codés, et c) des moyens d'affichage pour afficher les caractéristiques de la machine repré-sentées par ceuxci.

FIG.1

FIG.3

EP 0 150 887 B1

FIG.2